# EUROPEAN PATENT APPLICATION

(11) **EP 2 740 357 A1**
(43) Date of publication of application: **11.06.2014**
(21) Application number: 13188062.7
(22) Date of filing: 10.10.2013
(51) Int. Cl.: A01N 43/40, A01N 25/00

(54) **Active compounds for seed treatment**

(71) Applicant: Bayer CropScience AG, 40789 Monheim am Rhein (DE)
(72) Inventor: The designation of the inventor has not yet been filed
(74) Representative: BIP Patents

(57) **Abstract**

The present invention relates to the use of known compounds for the treatment of seed.

## Description

The present application relates to the use of known active compounds for the treatment of seed.

It also relates to the control of animal pests by the application of known active compounds to the soil.

It relates further to the use of known active compounds for the control of certain plant pests.

The active compounds of formula (I) 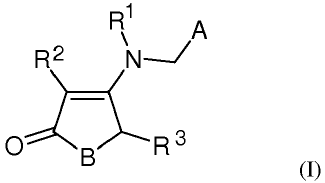 in which
- A: represents pyrid-2-yl or pyrid-4-yl or represents pyrid-3-yl which is optionally substituted in the 6-position by fluorine, chlorine, bromine, methyl, trifluoromethyl or trifluoromethoxy or represents pyridazin-3-yl which is optionally substituted in the 6-position by chlorine or methyl or represents pyrazin-3-yl or represents 2-chloropyrazin-5-yl or represents 1,3-thiazol-5-yl which is optionally substituted in the 2-position by chlorine or methyl,
- B: represents oxygen, sulphur or methylene,
- R¹: represents haloalkyl, haloalkenyl, halocycloalkyl or halocycloalkylalkyl,
- R²: represents hydrogen or halogen and
- R³: represents hydrogen or alkyl.
and their preparation are known form WO 2007/115644. One of those compounds is Compound (Ia), 4-{[(6-chloropyrid-3-yl)methyl](2,2-difluoroethyl)amino}furan-2(5H)-one, which has the formula

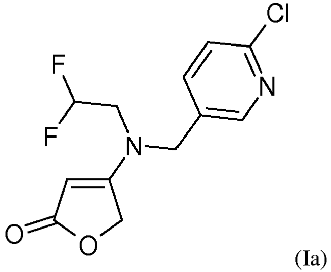

It has now been found that the known compounds of formula (I), especially Compound (Ia), are especially suitable for the treatment of seed.

A great deal of the damage on cultigens caused by pests occurs by the infestation of seed during storage and after application of the seed to the earth as well as during and immediately after germination of the plants. This phase is particularly critical since the roots and the shoots are especially sensitive, and even slight damage can lead to death of the plant. There is therefore considerable interest in protecting the seed and the germinating plants by the use of suitable agents.

The control of animal pests by treating the seed of plants has been known for a long time and is the subject of continuous improvements. However, the treatment of seed entails a series of problems which cannot always be solved in a satisfactory manner. Thus, it is desirable to develop methods for protecting the seed and the germinating plant which dispense with, or at least reduce considerably, the additional application of pesticides during storage, after sowing or after emergence of the plants. It is furthermore desirable to optimize the amount of active compound employed in such a way as to provide optimum protection for the seed and the germinating plant from attack by animal pests, but without damaging the plant itself by the active compound employed. In particular, methods for the treatment of seed should also take into consideration the intrinsic insecticidal or nematicidal properties of pest-resistant or -tolerant transgenic plants in order to achieve optimum protection of the seed and also the germinating plant with a minimum of pesticides being employed.

The present invention therefore in particular also relates to a method for the protection of seed and germinating plants, from attack by pests, by treating the seed with one of the compounds of the formula (I). The method according to the invention for protecting seed and germinating plants against attack by pests furthermore comprises a method where the seed is treated simultaneously in one operation or sequentially with a compound of the formula (I) and a mixing component. It also comprises a method where the seed is treated at different times with a compound of the formula (I) and a mixing component.

The invention likewise relates to the use of the compounds of the formula (I) for the treatment of seed for protecting the seed and the resulting plant from animal pests.

Furthermore, the invention relates to seed which has been treated with a compound of the formula (I) according to the invention so as to afford protection from animal pests. The invention also relates to seed which has been treated simultaneously with a compound of the formula (I) and a mixing component. The invention furthermore relates to seed which has been treated at different times with a compound of the formula (I) and a mixing component. In the case of seed which has been treated at different points in time with a compound of the formula (I) and a mixing component, the individual substances may be present on the seed in different layers. Here, the layers comprising a compound of the formula (I) and mixing components may optionally be separated by an intermediate layer. The invention also relates to seed where a compound of the formula (I) and a mixing component have been applied as component of a coating or as a further layer or further layers in addition to a coating.

Furthermore, the invention relates to seed which, after the treatment with a compound of the formula (I), is subjected to a film-coating process to prevent dust abrasion on the seed.

Thus, the present invention is also related to a method for coating seeds, especially soybean seeds *(Glycine max* (L.)), comprising the step of a) mixing seeds with a coating material consisting of or comprising a compound of formula (I), especially formula (Ia); b) accumulate of coated seeds; c) drying of said coated seeds; d) deagglomerate said dried coated seeds.

Suitable methods and additives for coatings like binders are described in, e.g., US 5,876,739.

Also encompassed are seeds produced according to this method for coating seeds.

One of the advantages encountered with a systemically acting compound of the formula (I) is the fact that, by treating the seed, not only the seed itself but also the plants resulting therefrom are, after emergence, protected against animal pests. In this manner, the immediate treatment of the crop at the time of sowing or shortly thereafter can be dispensed with.

It has to be considered a further advantage that by treatment of the seed with a compound of the formula (I), germination and emergence of the treated seed may be enhanced.

It is likewise to be considered advantageous that compounds of the formula (I) can be used in particular also for transgenic seed.

Furthermore, compounds of the formula (I) can be employed in combination with compositions or compounds of signalling technology, leading to better colonization by symbionts such as, for example, *rhizobia, mycorrhizae* and/or endophytic bacteria or fungi, and/or to optimized nitrogen fixation.

The compounds of the formula (I) are suitable for protection of seed of any plant variety which is used in agriculture, in the greenhouse, in forests or in horticulture. In particular, this takes the form of seed of cereals (for example wheat, barley, rye, millet and oats), corn, cotton, soybeans, rice, potatoes, sunflowers, coffee, tobacco, canola, oilseed rape, beets (for example sugarbeets and fodder beets), peanuts, vegetables (for example tomatoes, cucumbers, bean, cruciferous vegetables, onions and lettuce), fruit plants, lawns and ornamental plants. The treatment of the seed of cereals (such as wheat, barley, rye and oats), maize, soybeans, cotton, canola, oilseed rape and rice is of particular importance.

As already mentioned above, the treatment of transgenic seed with a compound of the formula (I) is also of particular importance. This takes the form of seed of plants which, as a rule, comprise at least one heterologous gene which governs the expression of a polypeptide with in particular insecticidal and/or nematicidal properties. The heterologous genes in transgenic seed can originate from microorganisms such as *Bacillus, Rhizobium, Pseudomonas, Serratia, Trichoderma, Clavibacter, Glomus* or *Gliocladium.* The present invention is particularly suitable for the treatment of transgenic seed which comprises at least one heterologous gene originating from Bacillus sp. It is particularly preferably a heterologous gene derived from *Bacillus thuringiensis.*

In the context of the present invention, the compound of the formula (I) is applied to the seed. Preferably, the seed is treated in a state in which it is stable enough to avoid damage during treatment. In general, the seed may be treated at any point in time between harvest and sowing. The seed usually used has been separated from the plant and freed from cobs, shells, stalks, coats, hairs or the flesh of the fruits. For example, it is possible to use seed which has been harvested, cleaned and dried down to a moisture content which allows storage. Alternatively, it is also possible to use seed which, after drying, has been treated with, for example, water and then dried again, for example priming.

When treating the seed, care must generally be taken that the amount of the compound of the formula (I) applied to the seed and/or the amount of further additives is chosen in such a way that the germination of the seed is not adversely affected, or that the resulting plant is not damaged. This must be ensured particularly in the case of active compounds which can exhibit phytotoxic effects at certain application rates.

In general, the compounds of the formula (I) are applied to the seed in a suitable formulation. Suitable formulations and processes for seed treatment are known to the person skilled in the art.

The compounds of the formula (I) can be converted to the customary seed dressing formulations, such as solutions, emulsions, suspensions, powders, foams, slurries or other coating compositions for seed, and also ULV formulations.

These formulations are prepared in a known manner, by mixing the compounds of the formula (I) with customary additives such as, for example, customary extenders and also solvents or diluents, colorants, wetting agents, dispersants, emulsifiers, antifoams, preservatives, secondary thickeners, adhesives, gibberellins and also water.

Colorants which may be present in the seed-dressing formulations which can be used in accordance with the invention are all colorants which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of agrochemically active compounds. Preference is given to using alkylnaphthalenesulphonates, such as diisopropyl- or diisobutylnaphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Preference is given to using nonionic or anionic dispersants or mixtures of nonionic or anionic dispersants. Suitable nonionic dispersants include in particular ethylene oxide/propylene oxide block polymers, alkylphenol polyglycol ethers and tristryrylphenol polyglycol ethers, and the phosphated or sulphated derivatives thereof. Suitable anionic dispersants are in particular lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Preference is given to using silicone antifoams and magnesium stearate.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances which can be used for such purposes in agrochemical compositions. Cellulose derivatives, acrylic acid derivatives, xanthan, modified clays and finely divided silica are preferred.

Adhesives which may be present in the seed dressing formulations usable in accordance with the invention are all customary binders usable in seed dressing products. Polyvinylpyrrolidone, polyvinyl acetate, polyvinyl alcohol and tylose may be mentioned as being preferred.

Gibberellins which can be present in the seed-dressing formulations which can be used in accordance with the invention are preferably the gibberellins A1, A3 (= gibberellic acid), A4 and A7; gibberellic acid is especially preferably used. The gibberellins are known (cf. R. Wegler "Chemie der Pflanzenschutz- and Schädlingsbekämpfungsmittel", vol. 2, Springer Verlag, 1970, pp. 401-412).

The seed dressing formulations usable in accordance with the invention can be used to treat a wide variety of different kinds of seed either directly or after prior dilution with water. For instance, the concentrates or the preparations obtainable therefrom by dilution with water can be used to dress the seed of cereals, such as wheat, barley, rye, oats, and triticale, and also the seed of maize, rice, oilseed rape, peas, beans, cotton, sunflowers, soybeans and beets, or else a wide variety of different vegetable seed. The seed dressing formulations usable in accordance with the invention, or the dilute use forms thereof, can also be used to dress seed of transgenic plants.

For treatment of seed with the seed dressing formulations usable in accordance with the invention, or the use forms prepared therefrom by adding water, all mixing units usable customarily for the seed dressing are useful. Specifically, the procedure in the seed dressing is to place the seed into a mixer, operated batch-wise or continously, to add the particular desired amount of seed dressing formulations, either as such or after prior dilution with water, and to mix everything until the formulation is distributed homogeneously on the seed. If appropriate, this is followed by a drying operation.

The application rate of the seed dressing formulations usable in accordance with the invention can be varied within a relatively wide range. It is guided by the particular content of the compounds of the formula (I) in the formulations and by the seed. The application rates of the compound of the formula (I) are generally between 0.001 and 50 g per kilogram of seed, preferably between 0.01 and 15 g per kilogram of seed.

Within the context of the present invention the compound of formula (I) is applied to the seed alone or in a suitable formulation. The seed is treated preferably at a time point at which it is so stable that no damage occurs during treatment. In general treatment of the seed can take place at any time between harvest and sowing. Normally seed is used that is separated from the plant and freed from spadix, husk, stem, pod, wool or fruit flesh.

In general care must be taken during treatment of seed that the amount of compound of formula (I) and/or further additives applied is so selected that the germination of the seed is not impaired and the emerging plant is not damaged. This is primarily to be noted with active compounds that can show phytotoxic effects when applied in certain amounts.

The compounds of formula (I) can be applied directly, that is without containing further components and without being diluted. It is usually preferred to apply the agent to the seed in the form of a suitable formulation. Suitable formulations and methods for seed treatment are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186A2.

The seed dressings of the invention are suitable for the control of animal pests, particularly arthropods and nematodes, especially insects and arachnids, that occur in agriculture and forestry. They are active against normally sensitive and resistant species as well as against all or individual development stages. The pests cited above include:
the order of Anoplura (Phthiraptera) e.g. Damalinia spp., Haematopinus spp., Linognathus spp., Pediculus spp., Trichodectes spp.,
the class of Arachnida e.g. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici,
the class of Bivalva e.g. Dreissena spp.,
the order of Chilopoda e.g. Geophilus spp., Scutigera spp.,
the order of Coleoptera e.g. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypo-thenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp.,
the order of Collembola e.g. Onychiurus armatus,
the order of Dermaptera e.g. Forficula auricularia,
the order of Diplopoda e.g. Blaniulus guttulatus,
the order of Diptera e.g. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.,
the class of Gastropoda e.g. Arion spp., Biomphalaria spp., Bulinus spp., Deroceras spp., Galba spp., Lymnaea spp., Oncomelania spp., Succinea spp.,
the class of helminths e.g. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti,
In addition protozoa such as Eimeria may be controlled.
The order of Heteroptera e.g. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.,
the order of Homoptera e.g. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii,
the order of Hymenoptera e.g. Diprion spp., Hoplocampa spp., Lasius spp., Monomorium pharaonis, Vespa spp.,
the order of Isopoda e.g. Armadillidium vulgare, Oniscus asellus, Porcellio scaber,
The order Isoptera e.g. Reticulitermes spp., Odontotermes spp.,
the order of Lepidoptera e.g. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Cydia pomonella, Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp.,
the order of Orthoptera e.g. Acheta domesticus, Blatta orientalis, Blattella germanica, Gryllotalpa spp., Leucophaea maderae, Locusta spp., Melanoplus spp., Periplaneta americana, Schistocerca gregaria,
the order of Siphonaptera e.g. Ceratophyllus spp., Xenopsylla cheopis,
the order of Symphyla e.g. Scutigerella immaculata,
the order of Thysanoptera e.g. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.,
the order of Thysanura e.g. Lepisma saccharina.

The plant parasitic nematodes include e.g. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp.

With the aid of the dressing of the invention the following orders of insects are preferably controllable:

Soil insects: Diptera (e.g. frit fly, bulb fly), Coleoptera (e.g. Diabrotica, wire worm), Lepidoptera (e.g. turnip moth), Blattophtheroidea, Myriopoda.

Leaf insects: Aphidina, Coleoptera, Brachycera, Lepidotera, Homoptera, Tysanoptera, Aleurodina, Cicadina, Acasi, Cossina, Heteroptera.

Even more preferably controllable are leaf insects of the genus Aphis, especially Aphis glycines.

In particular the compounds of formula (I) are used for seed treatment of soybean, Even more particular, the compounds of formula (I) are used for seed treatment of soybean for treating Aphis glycines.

Biological nitrogen fixation is the consequence of a complex and unique symbiosis between Rhizobium bacteria and legume host plants, especially soybean. The first stage in this process is the formation of nodules which occurs by the penetration of the host root hairs by rhizobial bacteria, followed by the formation of a rhizobial infection thread which moves into the host plant's root cortex, after which the rhizobial bacteria are encased in specialized plant cells and then undergo rapid multiplication. Subsequently, the rhizobial bacteria become pleomorphic, their nuclear material degenerates and the resulting bacteroids develop the enzyme complexes, particularly nitrogenase, required for nitrogen fixation. The environmental, nutritional and physiological conditions required for rhizobial cell growth and the successful establishment of efficient nitrogen-fixing symbioses are known (Trinick, M. J., 1982, IN W. J. Broughton (Ed.), Nitrogen Fixation Vol. 2, Clarendon Press, Oxford. pp. 76-146)

The amounts of nitrogen fixed by legume:Rhizobium symbioses are significant and, in agricultural situations, can be used to supplement or replace nitrogen fertilizer applications. For example, a typical rate of nitrogen fixation by nodulated alfalfa is up to 250 kg/hectare/year (Atlas, R. M. and R. Bartha, 1981, Microbial Ecology: Fundamentals and Applications, Addison-Wesley Pub. Co. Reading. pp. 364-365) and up to 450 kg/ha/yr by nodulated soybeans (Peoples, M. B. and E. T. Craswell, 1992, Plant Soil 141: 13-39). Consequently, legume crops have become an integral component of most field crop rotations used in agriculture around the world

Thus, it is advantageous if compounds for seed treatment do not negatively influence the presence of Rhizobia.

The good insecticidal activity of the compounds of formula (I) is illustrated in the following examples.

### Example A

### Aphis glycines - Seed Treatment

Soybean seeds (*Glycine max)* were mixed with the stated amount of compound and were sown into pots containing Einheitserde Special (Einheitserde, Altengronau, Germany), sand/clay and perlite (4.5:4.5:1). Once plants were in the V2 stage, the adaxial side of the top trifoliate was infested with ten adult, apterous female aphids *(Aphys glycines;* biotype I). Eight replications of each treatment were placed in a completely randomized design. Plants were evaluated at 48 hours after aphid infestation to assess aphid survival and were reinfested if infestation was lower than 10 nymphal and adult aphids.

The aphid population on each plant was counted 3, 7 and 10 days after infestation.

The data was tested for significance using an analysis of variance (ANOVA). When appropriate, means were separated using Fisher's least significant difference (LSD) test (α = 0.05).

In this test, Flupyradifurone, although tested in a lower concentration than the neonicotinoides, showed a significantly better knock-down efficacy than Imidacloprid and Clothianidin and a significantly better long lasting efficacy than Clothianidin.

**Table A: Aphis glycines - Seed Treatment**

| | | Mean number of aphids / plant ± SEM^{a} | | |
|---|---|---|---|---|
| Treatment | Concentration | 3 DAI^{b} | 7 DAI | 10 DAI |
| Gaucho^{®} 600FS [imidacloprid, (*E*)-1-(6-chloro-3-pyridylmethyl)-*N-*nitroimidazolidin-2-ylideneamine] | 0.0747 mg ai/seed | 8.1 ± 1.2a | 0.0 ± 0.0a | 0.0 ± 0.0a |
| Poncho^{®} 600FS [clothianidin, (E)-1-(2-chloro-1,3-thiazol-5-ylmethyl)-3-methyl-2-nitroguanidine] | 0.0747 mg ai/seed | 10.0 ± 1.7a | 3.1 ± 1.2 b | 5.5 ± 2.4 b |
| Sivanto^{®} 480FS [flupyradifurone, 4-[(6-chloro-3-pyridylmethyl)(2,2-difluoroethyl)amino]furan-2(5H)-one] | 0.045 mg ai/seed | 5.5 ± 0.9 b | 0.3 ± 0.3 a | 1.3 ± 1.1a |
| Untreated | | 34.6 ± 2.6 c | 101.4 ± 14.3 c | 288.8 ± 49.7 c |

| | | | | |
|---|---|---|---|---|
| ^{a} Standard error of the means; treatment means within the same column followed by the same letter indicate no significant differences (P ≤ 0.05), LSD test ^{b} DAI: days after infestation | | | | |

## Claims

1. Use of compounds of formula (I) 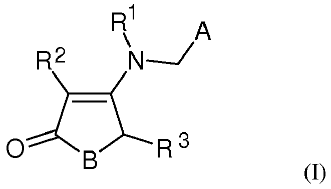 in which
A represents pyrid-2-yl or pyrid-4-yl or represents pyrid-3-yl which is optionally substituted in the 6-position by fluorine, chlorine, bromine, methyl, trifluoromethyl or trifluoromethoxy or represents pyridazin-3-yl which is optionally substituted in the 6-position by chlorine or methyl or represents pyrazin-3-yl or represents 2-chloropyrazin-5-yl or represents 1,3-thiazol-5-yl which is optionally substituted in the 2-position by chlorine or methyl,
B represents oxygen, sulphur or methylene,
R¹ represents haloalkyl, haloalkenyl, halocycloalkyl or halocycloalkylalkyl,
R² represents hydrogen or halogen and
R³ represents hydrogen or alkyl,
for the treatment of seed.

2. Use according to claim 1, wherein the compound of formula (I) is compound (Ib)

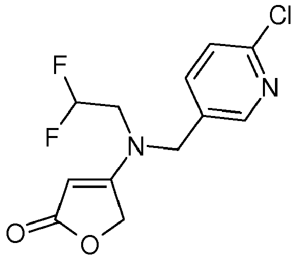

3. Seed treated with at least one of the compound as defined in claim 1 or claim 2.

4. Method for the control of zoopests comprising the step of coating a seed with a compound as defined in claim 1 or claim 2.

5. Use according to claim 1 or claim 2 for the control of Aphidina.

6. Use according to claim 5, wherein the Aphidina is Aphis glycines.

7. Use according to any one of claims 1, 2, 5, or 6 wherein the seed is a soybean seed.
